# EUROPEAN PATENT APPLICATION

(11) **EP 4 579 305 A1**
(43) Date of publication of application: **02.07.2025**
(21) Application number: 22961634.7
(22) Date of filing: 10.10.2022
(51) Int. Cl.: G02B 7/04

(54) **CAMERA ASSEMBLY AND ELECTRONIC DEVICE**

(71) Applicant: Huawei Technologies Co., Ltd., Shenzhen, Guangdong 518129 (CN)
(72) Inventor: SAKAE, Kazuki, Konan, 2-16-4, Shinagawa Grand Central Tower, 8F Tokyo 108--0075 (JP); HATTORI, Kazuhiro, Konan, 2-16-4, Shinagawa Grand Central Tower, 8F Tokyo 108--0075 (JP); ZHANG, Fuwei, Shenzhen, Guangdong 518129 (CN); ARIGA, Hiroshi, Konan, 2-16-4, Shinagawa Grand Central Tower, 8F Tokyo 108--0075 (JP)
(74) Representative: Thun, Clemens
(86) International application number: PCT/CN2022/124334
(87) International publication number: WO 2024/077438

(57) **Abstract**

This application provides a camera component and an electronic device. The camera component includes a magnetic guide shaft, a magnetic yoke, a coil, a magnetic structure, and a lens unit. Two ends of the magnetic yoke are connected to the magnetic guide shaft, and a magnet is disposed on a side that is of the magnetic yoke and that faces the magnetic guide shaft. The coil is sleeved on the magnetic guide shaft. The magnetic structure is disposed between the coil and the magnetic guide shaft. The lens unit is slidably connected to the magnetic guide shaft in an optical axis direction, and the lens unit is connected to the coil, to drive, through the coil, the lens unit to slide along the magnetic guide shaft. In this application, the magnetic structure is disposed, so that a design requirement of the magnetic guide shaft can be reduced, a diameter of the magnetic guide shaft can be designed to be small, and space occupation can be reduced; and the magnetic structure disposed between the magnetic guide shaft and the coil can absorb more magnetic fluxes.

## Description

### TECHNICAL FIELD

This application relates to the field of electronic device technologies, and in particular, to a camera component and an electronic device.

### BACKGROUND

An electronic product like a mobile phone or a tablet computer is usually integrated with an image shooting unit, and a voice coil motor (Voice Coil Motor, VCM) is one of main components for adjusting a position of a lens in the image shooting unit. In recent years, with an increase in functions of a camera module and improvement in performance of the camera module, a weight and a size of the camera module increase accordingly. This requires the camera module to have higher power to drive a heavy lens and implement high-speed focusing. However, power of a conventional voice coil motor almost reaches a limit, and it is difficult to further obtain higher power. If the power needs to be increased, a size of the voice coil motor usually needs to be increased. This makes it difficult to use the voice coil motor in limited space of the mobile phone or the tablet computer.

### SUMMARY

An objective of this application is to provide a camera component and an electronic device, to resolve the foregoing problems of low power and a large size of a conventional voice coil motor.

According to a first aspect, this application provides a camera component, including:
a magnetic guide shaft;
a magnetic yoke, where two ends of the magnetic yoke are connected to the magnetic guide shaft, and a magnet is disposed on a side that is of the magnetic yoke and that faces the magnetic guide shaft;
a coil, where the coil is sleeved on the magnetic guide shaft;
a magnetic structure, where the magnetic structure is disposed between the coil and the magnetic guide shaft; and
a lens unit, where the lens unit is slidably connected to the magnetic guide shaft in an optical axis direction, and the lens unit is connected to the coil, to drive, through the coil, the lens unit to slide along the magnetic guide shaft.

In this application, the magnetic structure is disposed, so that a design requirement of the magnetic guide shaft can be reduced, a diameter of the magnetic guide shaft can be designed to be small, and space occupation can be reduced; and the magnetic structure disposed between the magnetic guide shaft and the coil can absorb more magnetic fluxes.

In a possible design, the magnetic structure is a magnetic metal tube, the magnetic metal tube is sleeved on the magnetic guide shaft, and there is a gap between the magnetic metal tube and the magnetic guide shaft. Therefore, the magnetic metal tube can absorb the magnetic flux to a large extent, and can generate a large driving force for the lens unit, to drive the lens unit with a larger weight to move.

In a possible design, the magnetic structure is a magnetic coating, and the magnetic coating is formed on a surface of a side of that is of the coil and that faces the magnetic guide shaft. The magnetic coating and the coil may form an integrated structure, to reduce space occupation. The magnetic coating may also absorb more magnetic fluxes, and therefore, a Lorentz force can be increased to generate a driving force in the coil.

In a possible design, the lens unit includes an image shooting part and a movable part, and the image shooting part is connected to the movable part; the movable part includes a first limiting structure and a second limiting structure, the first limiting structure and the second limiting structure are spaced from each other in the optical axis direction, a hole is provided on each of the first limiting structure and the second limiting structure, and the movable part is slidably connected to the magnetic guide shaft through the hole; and one end of the coil abuts against the first limiting structure, and the other end of the coil abuts against the second limiting structure.

The first limiting structure and the second limiting structure are disposed on the movable part, so that the coil can be directly connected to the movable part, and a structure for connecting the coil does not need to be separately designed. In this way, space can be saved and miniaturization of the camera component is implemented. The movable part may further move relative to the magnetic guide shaft through the first limiting structure and the second limiting structure, so that an independent sliding component, for example, a sliding rail or a sliding slot, does not need to be designed. In this way, a design can also be simplified, space is saved, and miniaturization is implemented.

In a possible design, one end of the magnetic structure abuts against the first limiting structure, and the other end of the magnetic structure abuts against the second limiting structure. The first limiting structure and the second limiting structure are disposed on the movable part, so that the movable part, the coil, and the magnetic structure can be connected and fastened. In this way, a structure integration level of the camera component is high, and miniaturization of the camera component is implemented.

In a possible design, a recessed part is disposed on a side that is of the magnet and that faces the coil, the coil is disposed in the recessed part, and in a circumferential direction of the coil, a length of a circular arc that is of the coil and that is shielded by the recessed part is 1/2 to 3/4 of a circumference of the coil. Therefore, more magnetic fluxes can be collected, and increase of a driving force used to drive the lens unit to move is facilitated. In addition, 1/2 to 3/4 of the circumference of the coil may be accommodated in the recessed part. Therefore, the magnetic yoke can be prevented from interfering with the movable part during mounting; and in addition, in a case of preventing the magnetic yoke from interfering with the movable part, the coil has a large area and can be accommodated in an accommodating cavity, to collect more magnetic fluxes and obtain a larger driving force.

In a possible design, there are three magnets, one magnet is disposed in a first direction on a side that is of the coil and that is away from the lens unit, the other two magnets are respectively disposed on two sides of the coil in a second direction, and the first direction, the second direction, and the optical axis direction are perpendicular to each other.

Accommodating space may be enclosed by the three magnets, so that at least a part of the coil can be accommodated in the accommodating space. The three magnets may be respectively located in three different directions, and magnetic fluxes of the three magnets flow to the magnetic guide shaft, so that the magnetic structure can collect more magnetic fluxes, thereby helping increase the driving force.

In a possible design, a surface that is of the magnet and that faces the coil is a flat surface. The magnetic flux may flow to the magnetic guide shaft in a direction perpendicular to the surface, and the magnetic structure located between the magnetic guide shaft and the coil may collect the magnetic flux, to increase the driving force.

In a possible design, the magnetic yoke includes a first side plate, a second side plate, a third side plate, and a top plate, the first side plate is connected to an end of the second side plate, the third side plate is connected to an end that is of the second side plate and that is away from the first side plate, and both the first side plate and the third side plate are connected to the magnetic guide shaft; and the top plate is connected to a top of the second side plate, accommodating space is enclosed by the top plate, the first side plate, the second side plate, and the third side plate, and the magnet, the coil, and the magnetic guide shaft are disposed in the accommodating space.

The magnetic yoke may effectively prevent magnetic flux leakage through the first side plate, the second side plate, the third side plate, and the top plate, so that more magnetic fluxes can be collected through the magnetic structure, and the driving force can be further increased.

In a possible design, a distance between the second side plate and the third side plate is greater than a length of the coil in the optical axis direction. Therefore, magnetic flux leakage can be prevented through the magnetic yoke in all processes of driving the lens unit to move, in other words, it can be ensured that a large driving force can be provided when the lens unit is driven to move.

In a possible design, the top plate is provided with a flange, and the flange protrudes from a surface of the top plate in a direction away from the accommodating space. Therefore, the lens unit may be limited by the flange to move downward in the second direction, to ensure that the lens unit can stably move in the optical axis direction. In addition, the flange may also extend a leakage path of the magnetic flux, to help reduce magnetic flux leakage.

In a possible design, a diameter of the magnetic guide shaft is 0.5 mm to 2 mm. Within the value range, space occupation can be reduced, and integration of a structure can be improved. The coil, the magnet, and the magnetic yoke may be integrated on one side or two sides of the lens unit. This helps implement miniaturization of the camera module. In addition, there may be a sufficient gap between the magnetic guide shaft and the coil, so that a magnetic structure can be disposed between the magnetic guide shaft and the coil, to collect more magnetic fluxes, so as to obtain a larger driving force.

In a possible design, the lens unit includes a position sensor. The position sensor may be configured to detect a position at which the lens unit moves along an optical axis, to ensure precision of the position at which the lens unit moves.

In a possible design, there are two magnetic guide shafts, two magnetic yokes, two coils, and two magnetic structures, and the two magnetic guide shafts, the two magnetic yokes, the two coils, and the two magnetic structures are respectively disposed on two opposite sides of the lens unit.

The magnetic guide shaft, the magnetic yoke, the coil, and the magnetic structure that are on one side of the lens unit jointly form a group of drive components, and the magnetic guide shaft, the magnetic yoke, the coil, and the magnetic structure that are on the other side of the lens unit jointly form another group of drive components. The two groups of drive components are symmetrically distributed, so that a driving force can be jointly provided to drive the lens unit to move. Therefore, in this embodiment, two groups of drive components are symmetrically arranged, so that a driving force that is 1.5 to 2 times of a driving force of a conventional voice coil motor can be obtained, a camera component with a large weight can be driven, and miniaturization of the camera component can still be maintained.

According to a second aspect of this application, an electronic device is further provided, including the camera component provided in the first aspect of this application.

It should be understood that the foregoing general descriptions and the following detailed descriptions are merely used as an example, and should not limit this application.

### BRIEF DESCRIPTION OF DRAWINGS

FIG. 1 is a diagram of a structure of a camera component according to an embodiment of this application;
FIG. 2 is an exploded view of a camera component according to an embodiment of this application;
FIG. 3 is a diagram of a structure of a movable part;
FIG. 4 is a partial view of a camera component according to an embodiment of this application;
FIG. 5 is a diagram in which a magnetic structure is disposed inside a coil;
FIG. 6 is a state diagram of a magnet in use according to an embodiment;
FIG. 7 is a diagram of a structure of a magnet according to an embodiment;
FIG. 8 is a state diagram of a magnet in use according to another embodiment; and
FIG. 9 is a diagram of a structure of a magnetic yoke.

Reference numerals:
1: lens unit;
   11: movable part;
      111: first limiting structure;
      112: second limiting structure;
   12: image shooting part;
   13: position sensor;
2: magnetic guide shaft;
3: magnetic yoke;
   31: first side plate;
   32: second side plate;
   33: third side plate;
   34: top plate;
   35: flange;
4: coil;
5: magnet;
   51: recessed part; and
6: magnetic structure.

The accompanying drawings herein are incorporated into this specification and constitute a part of this specification, to show embodiments in accordance with this application, and are used, together with this specification, to explain the principle of this application.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

In descriptions of this application, unless otherwise specified and limited, the terms "first" and "second" are merely intended for a purpose of description, and should not be understood as an indication or implication of relative importance. Unless otherwise specified or stated, the term "a plurality of" means two or more than two. The terms "connection", "fastening" and the like should be understood in a broad sense. For example, the "connection" may be a fixed connection, or may be a detachable connection, an integrated connection, or an electrical connection, or may be a direct connection, or may be an indirect connection through an intermediate medium. A person of ordinary skill in the art may understand specific meanings of the foregoing terms in this application based on a specific case.

In descriptions of this specification, it should be understood that orientation words such as "above" and "below" described in embodiments of this application are described from perspectives shown in the accompanying drawings, and should not be construed as a limitation on embodiments of this application. In addition, in the context, it should be further understood that when it is mentioned that one element is connected "above" or "below" another element, the element can be directly connected "above" or "below" the another element, or may be indirectly connected "above" or "below" the another element through an intermediate element.

An electronic product like a mobile phone or a tablet computer is usually integrated with an image shooting unit. The image shooting unit includes a lens. An operation such as focusing may be implemented by adjusting a position of the lens. In terms of lens adjustment, currently, a voice coil motor (Voice Coil Motor, VCM) is generally used to implement adjustment.

However, in recent years, functions and performance of a camera module are rapidly enriched and improved, for example, an increase in a quantity of lenses and high-speed focusing. This poses a new requirement on drive power of the voice coil motor. For example, the voice coil motor needs to be capable of driving a lens whose weight increases due to an increase in the quantity. In addition, the voice coil motor needs to be capable of driving the lens to quickly move to implement high-speed focusing, and the like. However, power of a conventional voice coil motor almost reaches a limit, and it is difficult to further obtain higher power and a larger driving force. If power needs to be increased, a size of the voice coil motor usually needs to be increased. This makes it difficult to use the voice coil motor in limited space of the mobile phone or the tablet computer.

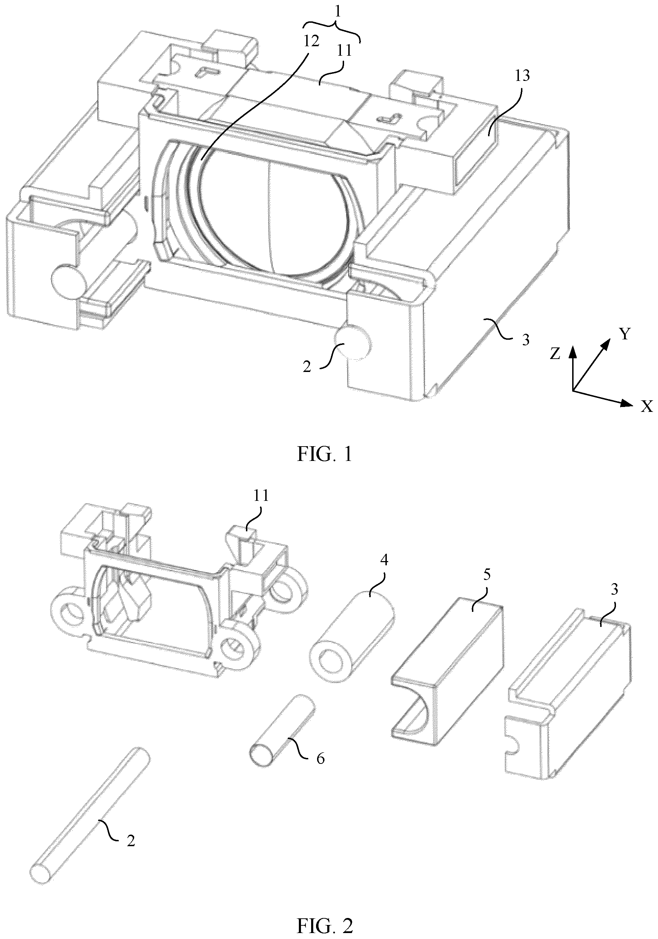

As shown in FIG. 1, embodiments of this application provide a camera component and an electronic device. The camera component is disposed in the electronic device, to provide an image shooting function. The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart city device. A specific type of the electronic device is not limited in embodiments of this application.

Specifically, as shown in FIG. 1 to FIG. 6, the camera component includes a magnetic guide shaft 2, a magnetic yoke 3, a coil 4, a magnetic structure 6, and a lens unit 1. The magnetic guide shaft 2 is made of a magnetic material. For example, the magnetic material may be a material with a high saturated magnetic flux density, for example, S45K. If precision and hardness of the magnetic guide shaft 2 are insufficient, a material such as SS430 may alternatively be used.

The coil 4 is sleeved on the magnetic guide shaft 2, and the coil 4 can generate a magnetic field after being powered on. Two ends of the magnetic yoke 3 are connected to the magnetic guide shaft 2, and a magnet 5 is disposed on a side that is of the magnetic yoke 3 and that faces the magnetic guide shaft 2. The magnetic yoke 3 may be manufactured by using soft iron, A3 steel, a soft magnetic alloy, or the like with a high magnetic permeability. The magnetic guide shaft 2 also has a function of the magnetic yoke 3, and can cooperate with the magnetic yoke 3 to form a closed magnetic circuit between the magnetic guide shaft 2 and the magnetic yoke 3.

The lens unit 1 is slidably connected to the magnetic guide shaft 2 in an optical axis direction Y, and the lens unit 1 is connected to the coil 4, to drive, through the coil 4, the lens unit 1 to slide along the magnetic guide shaft 2. The optical axis direction Y is consistent with an axial direction of the magnetic guide shaft 2. When the coil 4 is powered on, a generated magnetic force may enable the coil 4 to move in the axial direction of the magnetic guide shaft 2, to drive the lens unit 1 to move synchronously. In this way, a function such as focus adjustment of the lens unit 1 is implemented.

The magnetic structure 6 is disposed between the coil 4 and the magnetic guide shaft 2. The coil 4 is sleeved outside the magnetic guide shaft 2, there is a gap between the coil 4 and the magnetic guide shaft 2, and the magnetic structure 6 may be disposed in the gap. There is also a gap between the magnetic structure 6 and the magnetic guide shaft 2, so that the magnetic structure 6 and the magnetic guide shaft 2 are not in contact with each other. The magnetic structure 6 may absorb a magnetic flux between the coil 4 and the magnetic guide shaft 2. In other words, even if a diameter of the magnetic guide shaft 2 is small, more magnetic fluxes may also be absorbed through the magnetic structure 6, to generate a larger driving force.

Therefore, the magnetic structure 6 is disposed, so that a design requirement of the magnetic guide shaft 2 can be reduced, a diameter of the magnetic guide shaft 2 can be designed to be small, and space occupation can be reduced. The magnetic structure 6 is disposed between the magnetic guide shaft 2 and the coil 4, so that more magnetic fluxes can be absorbed. In addition, a magnetic field pulling force applied to the magnetic structure 6 can be adjusted by adjusting a thickness of the magnetic structure 6 in a radial direction of the magnetic guide shaft 2. The pulling force can ensure stability of the magnetic structure 6, and motion stability of the lens unit 1 in a proper state.

A material of the magnetic structure 6 may be consistent with that of the magnetic guide shaft 2. This is not limited in embodiments.

Specifically, in an embodiment, the magnetic structure 6 is a magnetic metal tube, the magnetic metal tube is sleeved on the magnetic guide shaft 2, and there is a gap between the magnetic metal tube and the magnetic guide shaft 2. The magnetic metal tube is of a cylindrical tubular structure, may be sleeved outside the magnetic guide shaft 2, and is not in contact with the magnetic guide shaft 2. A length of the magnetic metal tube in the axial direction may be consistent with a length of the coil 4 in the axial direction. In this way, a magnetic flux can be absorbed to a large extent, and a large driving force can be generated for the lens unit 1, to drive the lens unit 1 whose weight is increased to move.

In another embodiment, the magnetic structure 6 is a magnetic coating, and the magnetic coating is formed on a surface of a side that is of the coil 4 and that faces the magnetic guide shaft 2. In this embodiment, the magnetic coating may form, by using a process such as electroplating, a layer of magnetic coating on the surface of the side that is of the coil 4 and that faces the magnetic guide shaft 2. The magnetic coating and the coil 4 may form an integrated structure, to reduce space occupation. The magnetic coating may also absorb more magnetic fluxes, so that a Lorentz force can be increased to generate a driving force in the coil 4.

Specifically, as shown in FIG. 1, the lens unit 1 includes an image shooting part 12 and a movable part 11, the image shooting part 12 is connected to the movable part 11, and the movable part 11 includes a first limiting structure 111 and a second limiting structure 112. The first limiting structure 111 and the second limiting structure 112 are spaced from each other in an optical axis direction Y, a hole is provided on each of the first limiting structure 111 and the second limiting structure 112, and the movable part 11 is slidably connected to the magnetic guide shaft 2 through the hole. One end of the coil 4 abuts against the first limiting structure 111, and the other end of the coil 4 abuts against the second limiting structure 112.

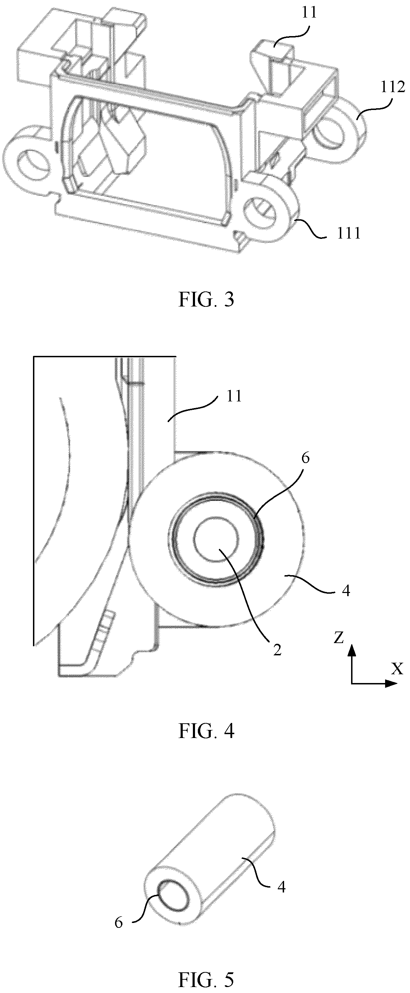

As shown in FIG. 2 and FIG. 3, the image shooting part 12 may include components such as a lens module and a circuit board. The movable part 11 may be used as an external frame structure of the image shooting part 12, is configured to carry the image shooting part 12, and can drive the image shooting part 12 to move as a whole. The first limiting structure 111 and the second limiting structure 112 are located on a same side of the movable part 11, and two ends of the coil 4 may respectively abut against or be fastened to the first limiting part and the second limiting part, so that when the coil 4 moves relative to the magnetic guide shaft 2, the movable part 11 may be driven to move synchronously, to drive the lens unit 1 to move as a whole. The first limiting structure 111 and the second limiting structure 112 are disposed on the movable part 11, so that the coil 4 can be directly connected to the movable part 11, and a structure for connecting the coil 4 does not need to be separately designed. In this way, space can be saved and miniaturization of the camera component is implemented. The movable part 11 may further move relative to the magnetic guide shaft 2 through the first limiting structure 111 and the second limiting structure 112, so that an independent sliding component, for example, a sliding rail or a sliding slot, does not need to be designed. In this way, a design can also be simplified, space is saved, and miniaturization is implemented.

Specifically, one end of the magnetic structure 6 abuts against the first limiting structure 111, and the other end of the magnetic structure 6 abuts against the second limiting structure 112.

An axial length of the magnetic structure 6 may be consistent with an axial length of the coil 4, so that two ends of the magnetic structure 6 may also respectively abut against or be fastened to the first limiting structure 111 and the second limiting structure 112. In this way, the magnetic structure 6, the coil 4, and the lens unit 1 can move synchronously. In other words, the first limiting structure 111 and the second limiting structure 112 are disposed on the movable part 11, so that the movable part 11, the coil 4, and the magnetic structure 6 can be connected and fastened. In this way, a structure integration level of the camera component is high, and miniaturization of the camera component is implemented.

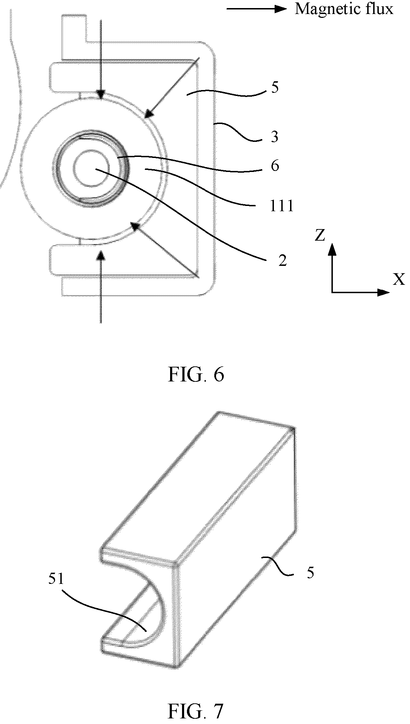

Specifically, as shown in FIG. 7, a recessed part 51 is disposed on a side that is of the magnet 5 and that faces the coil 4, and the coil 4 is disposed in the recessed part 51. In a circumferential direction of the coil 4, a length of a circular arc that is of the coil 4 and that is shielded by the recessed part 51 is 1/2 to 3/4 of a circumference of the coil 4.

A side that is of the magnet 5 and that is away from the recessed part 51 may be fastened on the magnetic yoke 3, and the recessed part 51 is formed on a side that is of the magnet 5 and that is away from the magnetic yoke 3, so that specific accommodating space is formed inside the recessed part 51. At least a part of the coil 4 may be disposed in the accommodating space, and a spacing between the part that is of the coil 4 and that is accommodated in the accommodating space and the magnet 5 is small, so that more magnetic fluxes can be collected, and increase in a driving force used to drive the lens unit 1 to move is facilitated. 1/2 to 3/4 of the circumference of the coil 4 may be accommodated in an accommodating cavity. Therefore, the magnetic yoke 3 can be prevented from interfering with the movable part 11 during mounting; and in addition, in a case of preventing the magnetic yoke 3 from interfering with the movable part 11, the coil 4 has a large area and can be accommodated in the accommodating cavity, to collect more magnetic fluxes and obtain a larger driving force.

In an embodiment, as shown in FIG. 7, an inner wall surface of the recessed part 51 may be an arc-shaped surface. For example, a cross section of the recessed part 51 is in a semicircular shape. When the coil 4 is accommodated in the recessed part 51, a part that is of the coil 4 and that is close to the inner wall of the recessed part 51 can collect a magnetic flux. In addition, the inner wall surface of the recessed part 51 may be a flat surface, and the magnetic flux may be collected at a position that is on the coil 4 and that is close to the flat surface of the recessed part 51. In this embodiment, the magnet 5 may be of an integrated structure, that is, the magnet 5 is an independent part, and the recessed part 51 may be directly formed on the magnet 5.

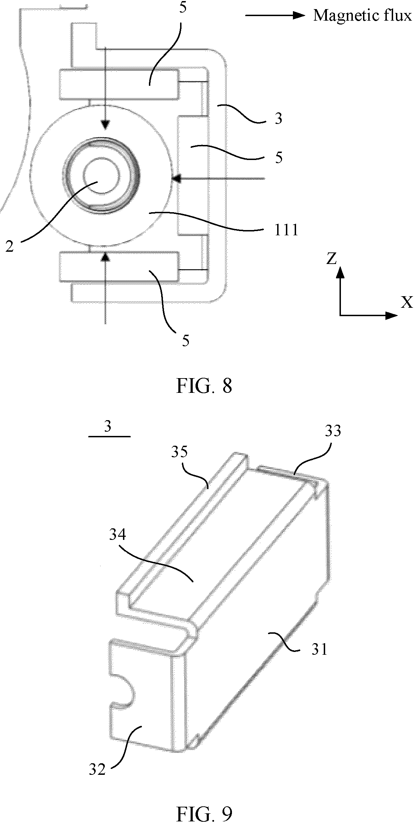

In another embodiment, as shown in FIG. 8, there are three magnets 5. One magnet 5 is disposed in a first direction X on a side that is of the coil 4 and that is away from the lens unit 1, the other two magnets 5 are respectively disposed on two sides of the coil 4 in a second direction Z, and the first direction X, the second direction Z, and the optical axis direction Y are perpendicular to each other.

Accommodating space may be enclosed by the three magnets 5, so that at least a part of the coil 4 can be accommodated in the accommodating space. The three magnets 5 may be respectively located in three different directions, for example, at one angle of view, the three magnets 5 may be respectively located above, below, and on a right side of the coil 4. Certainly, specific direction names may be different at different angles of view. The magnets 5 are correspondingly arranged in the three directions, and magnetic fluxes of the three magnets 5 flow to the magnetic guide shaft 2, so that the magnetic structure 6 can collect more magnetic fluxes, thereby helping increasing the driving force.

Specifically, as shown in FIG. 8, a surface of a side that is of the magnet 5 and that faces the coil 4 is a flat surface. The magnetic flux may flow to the magnetic guide shaft 2 in a direction perpendicular to the surface, and the magnetic structure 6 located between the magnetic guide shaft 2 and the coil 4 may collect the magnetic flux, to increase the driving force.

Specifically, as shown in FIG. 9, the magnetic yoke 3 includes a first side plate 31, a second side plate 32, a third side plate 33, and a top plate 34. The first side plate 31 is connected to an end of the second side plate 32, the third side plate 33 is connected to an end that is of the second side plate 32 and that is away from the first side plate 31, and both the first side plate 31 and the third side plate 33 are connected to the magnetic guide shaft 2. The top plate 34 is connected to a top of the second side plate 32. Accommodating space is enclosed by the top plate 34, the first side plate 31, the second side plate 32, and the third side plate 33. The magnet 5, the coil 4, and the magnetic guide shaft 2 are disposed in the accommodating space.

The first side plate 31 may shield a side of the magnet 5, the coil 4, and the magnetic guide shaft 2 in the first direction X, to reduce magnetic flux leakage to the outside in the first direction X. The second side plate 32 and the third side plate 33 may respectively shield two ends of the magnet 5, the coil 4, and the magnetic guide shaft 2 in the optical axis direction Y, to reduce magnetic flux leakage to the outside in the optical axis direction Y. The top plate 34 shields a side of the magnet 5, the coil 4, and the magnetic guide shaft 2 in the second direction Z, so that magnetic flux leakage to the outside in the second direction Z can be reduced. The magnetic yoke 3 may effectively prevent magnetic flux leakage through the first side plate 31, the second side plate 32, the third side plate 33, and the top plate 34, so that more magnetic fluxes can be collected through the magnetic structure 6, and the driving force can be further increased.

Specifically, a distance between the second side plate 32 and the third side plate 33 is greater than a length of the coil 4 in the optical axis direction Y. When the coil 4 drives the lens unit 1 to move synchronously, the coil 4 can always move between the second side plate 32 and the third side plate 33 that are of the magnetic yoke 3, so that magnetic flux leakage can be prevented through the magnetic yoke 3 in all processes of driving the lens unit 1 to move, in other words, it can be ensured that there is a large driving force when the lens unit 1 is driven to move.

Specifically, the top plate 34 is provided with a flange 35, and the flange 35 protrudes from a surface of the top plate 34 in a direction away from the accommodating space.

After the camera component is assembled, a part of the lens unit 1 may be located, in the second direction Z, on a side that is of the flange 35 and that is away from the top plate 34, so that the lens unit 1 may be limited, through the flange 35, to move downward in the second direction Z, to ensure that the lens unit 1 can stably move in the optical axis direction Y. In addition, the flange 35 may also extend a leakage path of the magnetic flux, to help reduce magnetic flux leakage.

Specifically, a diameter of the magnetic guide shaft 2 may be 0.5 mm to 2 mm. Within the value range, space occupation can be reduced, and integration of a structure can be improved. The coil 4, the magnet 5, and the magnetic yoke 3 may be integrated on one side or two sides of the lens unit 1. This helps implement miniaturization of the camera module. In addition, there may be a sufficient gap between the magnetic guide shaft 2 and the coil 4, so that the magnetic structure 6 can be disposed between the magnetic guide shaft 2 and the coil 4, to collect more magnetic fluxes, so as to obtain a larger driving force.

If the diameter of the magnetic guide shaft 2 is excessively small, for example, less than 0.5 mm, the magnetic guide shaft 2 does not have sufficient strength to support the lens unit 1. However, if the diameter of the magnetic guide shaft 2 is excessively large, for example, greater than 2 mm, the magnetic guide shaft 2 occupies greater space. As a result, there is no sufficient space between the magnetic guide shaft 2 and the coil 4 for disposing the magnetic structure 6, and a size of the camera component is large. This is not conducive to a miniaturization design.

In this embodiment, the diameter of the magnetic guide shaft 2 may be specifically 0.5 mm, 1 mm, 1.5 mm, or 2 mm.

Specifically, the lens unit 1 includes a position sensor 13. The position sensor 13 may be configured to detect a position at which the lens unit 1 moves along an optical axis, to ensure precision of the position at which the lens unit 1 moves.

Specifically, as shown in FIG. 1, there are two magnetic guide shafts 2, two magnetic yokes 3, two coils 4, and two magnetic structures 6, and the two magnetic guide shafts 2, the two magnetic yokes 3, the two coils 4, and the two magnetic structures 6 are respectively disposed on two opposite sides of the lens unit 1.

The magnetic guide shaft 2, the magnetic yoke 3, the coil 4, and the magnetic structure 6 that are on one side of the lens unit 1 jointly form a group of drive components, and the magnetic guide shaft 2, the magnetic yoke 3, the coil 4, and the magnetic structure 6 that are on the other side of the lens unit 1 jointly form another group of drive components. The two groups of drive components are symmetrically distributed, so that a driving force can be jointly provided to drive the lens unit to move. Therefore, in this embodiment, two groups of drive components are symmetrically arranged, so that a driving force that is 1.5 to 2 times of a driving force of a conventional voice coil motor can be obtained, a camera component with a large weight can be driven, and miniaturization of the camera component can still be maintained.

The foregoing describes merely preferred embodiments of this application, which are not intended to limit this application. For a person skilled in the art, various modifications and changes may be made in this application. Any modification, equivalent replacement, or improvement made without departing from the spirit and principle of this application shall fall within the protection scope of this application.

## Claims

1. A camera component, comprising:
a magnetic guide shaft;
a magnetic yoke, wherein two ends of the magnetic yoke are connected to the magnetic guide shaft, and a magnet is disposed on a side that is of the magnetic yoke and that faces the magnetic guide shaft;
a coil, wherein the coil is sleeved on the magnetic guide shaft;
a magnetic structure, wherein the magnetic structure is disposed between the coil and the magnetic guide shaft; and
a lens unit, wherein the lens unit is slidably connected to the magnetic guide shaft in an optical axis direction, and the lens unit is connected to the coil, to drive, through the coil, the lens unit to slide along the magnetic guide shaft.

2. The camera component according to claim 1, wherein the magnetic structure is a magnetic metal tube, the magnetic metal tube is sleeved on the magnetic guide shaft, and there is a gap between the magnetic metal tube and the magnetic guide shaft.

3. The camera component according to claim 1, wherein the magnetic structure is a magnetic coating, and the magnetic coating is formed on a surface of a side that is of the coil and that faces the magnetic guide shaft.

4. The camera component according to any one of claims 1 to 3, wherein the lens unit comprises an image shooting part and a movable part, and the image shooting part is connected to the movable part;
the movable part comprises a first limiting structure and a second limiting structure, the first limiting structure and the second limiting structure are spaced from each other in the optical axis direction, a hole is provided on each of the first limiting structure and the second limiting structure, and the movable part is slidably connected to the magnetic guide shaft through the hole; and
one end of the coil abuts against the first limiting structure, and the other end of the coil abuts against the second limiting structure.

5. The camera component according to claim 4, wherein one end of the magnetic structure abuts against the first limiting structure, and the other end of the magnetic structure abuts against the second limiting structure.

6. The camera component according to any one of claims 1 to 5, wherein a recessed part is disposed on a side that is of the magnet and that faces the coil, the coil is disposed in the recessed part, and in a circumferential direction of the coil, a length of a circular arc that is of the coil and that is shielded by the recessed part is 1/2 to 3/4 of a circumference of the coil.

7. The camera component according to any one of claims 1 to 5, wherein there are three magnets, one magnet is disposed in a first direction on a side that is of the coil and that is away from the lens unit, the other two magnets are respectively disposed on two sides of the coil in a second direction, and the first direction, the second direction, and the optical axis direction are perpendicular to each other.

8. The camera component according to claim 7, wherein a surface of a side that is of the magnet and that faces the coil is a flat surface.

9. The camera component according to any one of claims 1 to 8, wherein the magnetic yoke comprises a first side plate, a second side plate, a third side plate, and a top plate, the first side plate is connected to an end of the second side plate, the third side plate is connected to an end that is of the second side plate and that is away from the first side plate, and both the first side plate and the third side plate are connected to the magnetic guide shaft; and
the top plate is connected to a top of the second side plate, accommodating space is enclosed by the top plate, the first side plate, the second side plate, and the third side plate, and the magnet, the coil, and the magnetic guide shaft are disposed in the accommodating space.

10. The camera component according to claim 9, wherein a distance between the second side plate and the third side plate is greater than a length of the coil in the optical axis direction.

11. The camera component according to claim 9, wherein the top plate is provided with a flange, and the flange protrudes from a surface of the top plate in a direction away from the accommodating space.

12. The camera component according to any one of claims 1 to 12, wherein a diameter of the magnetic guide shaft is 0.5 mm to 2 mm.

13. The camera component according to any one of claims 1 to 12, wherein the lens unit comprises a position sensor.

14. The camera component according to any one of claims 1 to 12, wherein there are two magnetic guide shafts, two magnetic yokes, two coils, and two magnetic structures, and the two magnetic guide shafts, the two magnetic yokes, the two coils, and the two magnetic structures are respectively disposed on two opposite sides of the lens unit.

15. An electronic device, comprising the camera component according to any one of claims 1 to 14.
